# EUROPÄISCHE PATENTSCHRIFT

(11) **EP 0 488 989 B1**
(45) Veröffentlichungstag und Bekanntmachung des Hinweises auf die Patenterteilung: **30.08.1995**
(21) Anmeldenummer: 91890286.7
(22) Anmeldetag: 18.11.1991
(51) Int. Cl.: C04B 7/44

(54) **Verfahren zum Herstellen von Zementklinker**
Process for producing cement clinker
Procédé pour la fabrication de clinker de ciment

(30) Priorität: 30.11.1990 AT 2428/90
(43) Veröffentlichungstag der Anmeldung: 03.06.1992
(73) Patentinhaber: WOPFINGER Stein- und Kalkwerke Schmid & Co., A-2754 Waldegg/Wopfing (AT); PWA ORTMANN AKTIENGESELLSCHAFT, 1020 Wien (AT)
(72) Erfinder: Ernstbrunner, Ludwig, Ing., A-2721 Bad Fischau-Brunn (AT)
(74) Vertreter: Müllner, Erwin, Dr.

(56) Entgegenhaltungen:
- DE-A- 3 542 004
- GB-A- 251 558
- US-A- 4 391 671
- CHEMICAL ABSTRACTS, vol. 95, no. 26, 28. Dezember 1981, Columbus, Ohio, US;abstract no. 224507V, DAIICHI NENRYO KOGYO CO.: 'Use of paper sludge for cement manufacture' Seite 300 ; and JP-A-56 100 222 (Daichi Nenryo Kogyo Co) 12.August 1981
- CHEMICAL ABSTRACTS, vol. 102, no. 4, Januar 1985, Columbus, Ohio, US; abstract No. 30999Z, Noda Plywood MFG. Co. "Inorganic Building Materials", Seite 400 and JP-A-59 156 956 (Noda Plywood MFG. Co.) 6.September 1984

## Beschreibung

Die Erfindung betrifft ein Verfahren zur Herstellung von Zementklinker durch Brennen im Drehrohrofen unter Zusatz von vorgetrockneten minderwertigen Brennstoffen am Ofeneinlauf als Sekundärfeuerung.

Die allgemeine Verknappung und Verteuerung von Deponiemöglichkeiten hat in den Industriestaaten vermehrt zur Abfall- und Müllverbrennung geführt, um das Deponievolumen zu reduzieren. Bisher wurde z.B. in der Papierindustrie der anfallende Papierschlamm gemeinsam mit Baumrinde oder anderen Brennstoffen verbrannt, jedoch muß auch bei diesem Verfahren die anfallende Asche deponiert werden, was im steigenden Maß Kosten verursacht und an der vorhandenen Problematik nichts ändert.

Papierschlamm besteht zu etwa fünfzig Prozent aus Wasser, der Rest setzt sich aus kurzen Zellstoffasern und sogenannten Füllstoffen zusammen. Als Füllstoffe werden in der Papierindustrie vorwiegend natürliche Rohstoffe, wie Kaolin und Calciumcarbonat, verwendet.

Bei der Herstellung von Zementklinker wurde schon bisher eine sogenannte Sekundärverbrennung am Ofeneinlauf vorgesehen, bei der minderwertiger Brennstoff, wie Gummireifen, kohlehaltiger Abraum, Ölschlamm u.dgl. zugesetzt wird, wodurch ein Teil der benötigten Verbrennungsenergie durch diesen Zusatz abgedeckt wird. Ungeeignet für die Verwendung in Sekundärfeuerungen am Ofeneinlauf sind allerdings Brennstoffe, die so feucht sind, daß die aufzuwendende Verdampfungswärme zur Trocknung des Materials keinen oder keinen wesentlichen Energiegewinn bringt. In diesem Zusammenhang sei auch erwähnt, daß bei anderen bekannten Brennverfahren z.B. Klärschlamm in getrennten Anlagen durch Fremdenergie getrocknet, zwischengelagert und danach dem Zementerzeugungsprozeß als Brennstoffzusatz zugeführt wird.

Es wurde gemäß der GB-B-PS Nr. 251 558 auch schon vorgeschlagen, zur Trocknung derartiger minderwertiger Brennstoffe die Wärme der Ofenabgase heranzuziehen.

Eine weitere bekannte Möglichkeit besteht darin, die bei Trocknungs- und Verbrennungsprozessen entstehende Asche beim Zementherstellungsverfahren zu verwenden.

Die Erfindung betrifft somit ein Verfahren zur Herstellung von Zementklinker durch Brennen im Drehrohrofen unter Zusatz von vorgetrockneten minderwertigen Brennstoffen am Ofeneinlauf als Sekundärfeuerung, wobei die Vortrocknung durch die Wärme der Ofenabgase erfolgt.

Die Erfindung ermöglicht es, den zur Hälfte aus Trockensubstanz, zur Hälfte aus Wasser bestehenden, an sich für die Verbrennung ungeeigneten, weil zu feuchten Papierschlamm dennoch als Sekundärbrennstoff verwenden zu können und damit eines der in mehrfacher Hinsicht wirtschaftlich äußerst kostspieligen Probleme zu lösen. Gleichzeitig soll auch die beim Verbrennen immer anfallende Asche nicht nur beseitigt sondern sogar nutzbringend verwertet werden.

Dieses Ziel wird gemäß der Erfindung dadurch erreicht, daß vorgetrockneter Papierschlamm aus der Papiererzeugung als Zusatzbrennstoff eingestzt wird, wobei dem Papierschlamm ein Teil seiner Feuchte durch die Ofenabgase im Verbundbetrieb mit dem Zementerzeugnisprozeß entzogen wird; die Trocknung erfolgt hiebei zweckmäßig auf etwa 30 Masse-% Wassergehalt. Nach einer speziellen Ausführungsform der Erfindung gelangt das aus dem Ofeneinlauf austretende Abgas nach Durchströmen eines dem Ofen vorgeschalteten Rohmehlvorwärmers zum einen Teil als Hauptstrom über eine Mahltrocknungsanlage bzw. eine Rückgewinnungsanlage für Rohmehl nach außen, zum anderen Teil wird es vorgereinigt einer Trockeneinrichtung (z.B. Schwingtrockner, Trockentrommel od. dgl.) zum Vortrocknen des Papierschlammes zugeführt. Dabei ist es von Vorteil, daß das aus der Trockeneinrichtung austretende Gas erst nach Durchsetzen eines Papierrestmengenabscheiders dem Hauptstrom zugeführt wird.

Die erfindungsgemäßen Maßnahmen ermöglichen somit in vorteilhafter Weise, daß die Feuchte des Papierschlammes vor dessen Verfeuerung auf ein derartiges Maß reduziert wird, daß sein Wärmeinhalt für die Zementerzeugung nutzbringend verwendet werden kann und somit, weil die zum Vortrocknen des feuchten Schlammes erforderliche Wärmeenergie der im Abgas des Drehrohrofens enthaltenen Wärme entnommen wird, der spezifische Wärmeverbrauch beim Brennprozeß herabgesetzt wird. All dies geschieht unter Vermeidung einer unzulässigen Anreicherung an Brennstoff im Zementrohmehl, wobei auch der Anteil an unverbranntem Brennstoff im Abgas gering gehalten wird. Ein besonderer Vorteil ist auch darin zu sehen, daß die bei der Verbrennung des Papierschlammes anfallende Asche durch entsprechende Regelung beim Zumischen anderer an sich erforderlicher Rohmehlkomponenten das Entstehen eines qualitativ einwandfreien, normgerechten Zementklinkers ermöglicht.

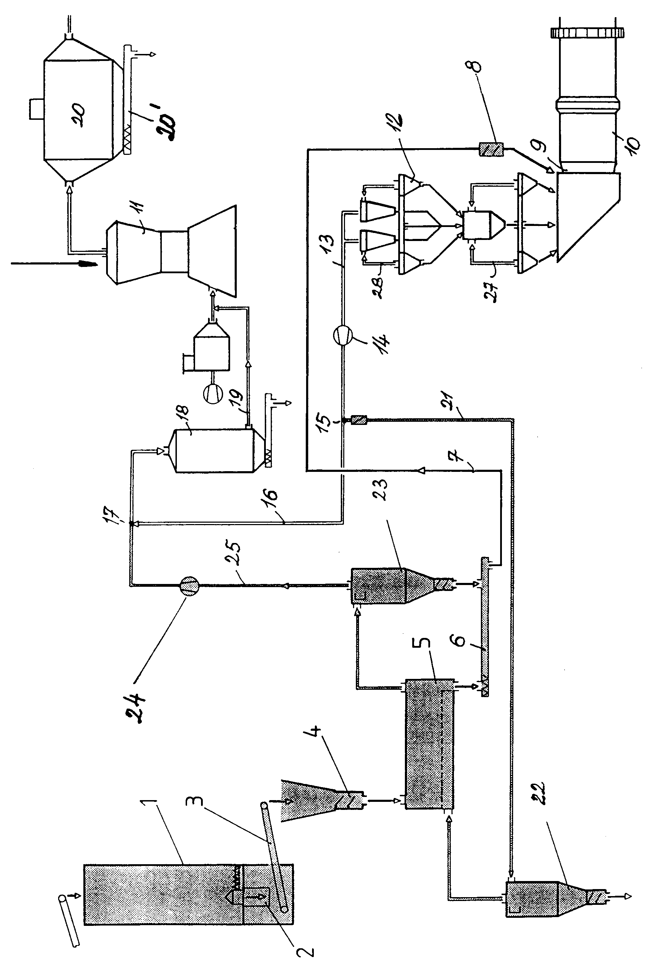

Ein Ausführungsbeispiel einer für das erfindungsgemäße Verfahren geeigneten Anlage soll nachstehend an Hand der Zeichnung näher erläutert werden.

Der im Bereich eines Zementwerkes aufgestellte Vorratssilo 1 dient zur Speicherung von feuchtem Papierschlamm, der im allgemeinen etwa 50 % Trockensubstanz und als Rest blasser enthält. Der Heizwert des Papierschlammes, bezogen auf Trockensubstanz, beträgt ca. 6700 kJ/kg. Am unteren Ende des Vorratssilos ist eine Austrag- und Dosiereinrichtung 2 vorgesehen, an die sich ein Dosierband 3 anschließt. Durch stufenlose Regelung der Bandgeschwindigkeit des Dosierbandes wird eine dem jeweiligen Verfahrenszustand angepaßte Abgabemenge an feuchtem Papierschlamm gewährleistet. Über eine motorisch betriebene Schleuse 4 gelangt der feuchte Papierschlamm in eine Trockeneinrichtung 5, die z.B. als Schwingtrockner, Trockentrommel u.dgl. ausgebildet sein kann. Das Ofenabgas tritt in den Trockner mit ca. 350 bis 370°C ein. Über eine Förderschnecke 6 und an diese anschließend über eine Schurre 7 gelangt so vorgetrocknete Papierschlamm mit einer Feuchte von nunmehr etwa 30 Masse-% zu einer Schleuse 8 und von dieser zum Einlauf 9 eines Drehrohrrofens 10. Die Ausgangsstoffe durchwandern diesen Drehrohrofen langsam und werden durch Erhitzen in Zementklinker umgewandelt.

Die aus Kalkstein und Silikatgemischen (Tonen) bestehenden Ausgangsstoffe werden in einer Mahltrocknungsanlage 11 gemahlen und über eine Reinigungsanlage (Filter 20) sowie eine Förderschnecke 20′ einem Silo zugeführt. Entsprechend dem Bedarf wird Rohmehl über einen Rohmehlvorwärmer 12 in mehreren Stufen in Form von mehreren Rohmehlströmen dem Ofeneinlauf 9 zugeführt.

Die aus dem Ofeneinlauf 9 austretenden Abgase gelangen über Leitungen 27, 28, den Rohmehlvorwärmer 12 zu einer Abgasleitung 13 und ein Saugzuggebläse 14 zu einer Leitungsverzweigung 15.

Ein Teil des Abgases, etwa 80 %, strömt als Hauptstrom durch eine Leitung 16 zu einer Stelle 17, von dieser über einen Kühlturm 18, eine Leitung 19 zur Mahltrocknungsanlage 11 und schließlich über die bereits erwähnte Reinigungsanlage (Filter 20) ins Freie.

Von der Leitungsverzweigung 15 führt eine Leitung 21, die Gas- und Staub enthält, zu einer Einrichtung 22 für die Austragung von Reststaub und von dieser zur Trockeneinrichtung 5. Nach Durchsetzen dieser Trockeneinrichtung hat das Gas nurmehr eine Temperatur von 170 ° C und wird einem Papierrestmengenabscheider 23 zugeführt, der an die bereits erwähnte Fördereinrichtung 6 für den vorgetrockneten Papierschlamm angeschlossen ist. Das nunmehr einen bereits geringen Papieranteil aufweisende Trockengas gelangt über eine Leitung 25 und ein Gebläse 24 zu der Anschlußstelle 17, wo es sich mit dem durch die Leitung 16 ankommenden Abgas-Hauptstrom vereinigt.

Das erfindungsgemäße Verfahren ermöglicht das Trocknen, Verbrennen und die stoffliche Nutzung von feuchtem Papierschlamm, wobei eine Zwischenlagerung des Trockengutes nach dem Trocknen entfällt und dieses direkt der Nutzung im Drehrohrofen als Sekundärbrennstoff zugeführt wird.

Mit Vorteil werden die aus dem Drehrohrofen bzw. aus dem Rohmehlvorwärmer austretenden Trockengase vor der Nutzung in der Trockeneinrichtung 5 einer Vorreinigung mittels eines üblichen Zyclon unterzogen. Somit sind die nach dem Trockner 5 anfallenden Gase weitgehend von Papierschlammresten frei, wodurch eine unzulässige Anreicherung von Brennstoff im Zementrohmehl vermieden wird. Damit wird erreicht, daß der Anteil an Unverbranntem im Abgas nicht zu hoch wird.

Es ist schließlich ersichtlich, daß die bei der Verbrennung des Papierschlammes anfallende Asche als durchaus brauchbar, durch Aufnahme in den Zementklinker genutzt wird, also nicht deponiert zu werden braucht. Es versteht sich, daß durch entsprechende Mischungsregelungen mit den anderen Rohmehlkomponenten ein qualitativ einwandfreier, normgerechter Zementklinker hergestellt werden kann.

| **ROHMEHLANALYSE** | | |
|---|---|---|
| | **ohne Papierschlamm** in Masse-% | **mit Papierschlamm** in Masse-% |
| SiO₂ | 13,8 | 13,4 |
| Al₂O₃ | 3,7 | 3,6 |
| Fe₂O₃ | 1,3 | 1,4 |
| CaO | 42,8 | 43,3 |
| Rest | Glühverlust, K₂O, SO₃, MgO | |
| Silikatmodul | 2,76 | 2,68 |
| Kalkstandard | 98,1 | 102,0 |

Wärmeverbrauch ohne Papierschlammzusatz ca. 3600 kJ/kg Klinker, mit Papierschlammzusatz 3300 kJ/kg Klinker.

## Patentansprüche

1. Verfahren zur Herstellung von Zementklinker durch Brennen im Drehrohrofen unter Zusatz von vorgetrockneten minderwertigen Brennstoffen am Ofeneinlauf als Sekundärfeuerung, wobei die Vortrocknung durch die Wärme der Ofenabgase erfolgt, dadurch gekennzeichnet, daß durch die Ofenabgase im Verbundbetrieb mit dem Zementerzeugungsprozeß auf vorzugsweise etwa 30 Masse-% Wassergehalt vorgetrockneter Papierschlamm aus der Papiererzeugung als Zusatzbrennstoff eingesetzt wird.

2. Verfahren nach Anspruch 1, dadurch gekennzeichnet, daß das aus dem Ofeneinlauf austretende Abgas nach Durchströmen des dem Ofen vorgeschalteten Rohmehlvorwärmers zum einen Teil als Hauptstrom über eine Mahltrocknungsanlage bzw. eine Rückgewinnungsanlage für Rohmehl nach außen gelangt, zum anderen Teil vorgereinigt einer Trockeneinrichtung, wie Schwingtrockner, Trockentrommel, zum Vortrocknen des Papierschlammes zugeführt wird.

3. Verfahren nach Anspruch 2, dadurch gekennzeichnet, daß das aus der Trockeneinrichtung austretende Gas nach Durchsetzen eines Papierrestmengenabscheiders dem Abgas-Hauptstrom zugeführt wird.

## Claims

1. A method of manufacturing cement clinker by firing in the rotary kiln with the addition of pre-dried low-grade fuels at the kiln inlet as a secondary fuel, in which the pre-drying results from the heat of the kiln flue gases, characterised in that due to the kiln flue gases cooperating with the cement production process, pre-dried paper slurry from paper production, preferably with a water content up to approximately 30% by mass is used as the additional fuel.

2. A method according to claim 1, characterized in that the flue gas emerging from the kiln inlet, after flowing through the raw mix preheater arranged in front of the kiln partly arrives outside as a main stream via a pulveriser-drier or a recovery station for raw mix, and is partly conducted, pre-cleaned, to a drying devise such as an oscillating or rotary dryer, in order to pre-dry the paper slurry.

3. A method according to claim 2, characterised in that the gas emerging from the drying device, after passing through a residual paper quantity separator, is conducted to the flue gas main stream.

## Revendications

1. Procédé de fabrication de clinker de ciment par cuisson au four tournant avec addition de combustibles de moindre valeur pré-séchés à l'entrée du four, comme combustible secondaire, le pré-séchage étant réalisé à l'aide de la chaleur des gaz effluents du four, caractérisé en ce qu'on introduit comme combustible supplémentaire à travers les gaz effluents du four, en fonctionnement interconnecté avec le processus de fabrication du ciment, de la boue de papeterie pré-séchée, de préférence à une teneur en eau de 30% en masse, provenant de la fabrication du papier.

2. Procédé selon la revendication 1, caractérisé en ce que le gaz effluent sortant de l'entrée du four après traversée du préchauffeur de farine crue (de ciment) monté en amont du four, est pour partie déchargé à l'extérieur comme courant principal, via une installation de séchage de mouture, ou bien via une installation de récupération de farine crue, et pour une autre partie est conduit, pré-épuré, à un dispositif de séchage, tel que sécheur oscillant, tambour sécheur, pour le pré-séchage de boue de papeterie.

3. Procédé selon la revendication 2, caractérisé en ce que le gaz sortant du dispositif de séchage est conduit au courant principal de gaz effluent, après traversée d'un séparateur des restes de papier.
